# FASCICULE DE BREVET EUROPEEN

(11) **EP 0 884 706 B1**
(45) Date de publication et mention de la délivrance du brevet: **25.06.2003**
(21) Numéro de dépôt: 98401110.6
(22) Date de dépôt: 07.05.1998
(51) Int. Cl.: G08C 17/02, H04B 1/16

(54) **Procédé de gestion d'un récepteur de télécommande**
Verfahren zur Verwaltung eines Fernsteuerungsempfängers
Method for managing a remote control receiver

(30) Priorité: 10.06.1997 FR 9707156
(43) Date de publication de la demande: 16.12.1998
(73) Titulaire: SAGEM SA, 75116 Paris (FR)
(72) Inventeur: Delaporte, Francis, 95520 Osny (FR)
(74) Mandataire: Bloch, Gérard

(56) Documents cités:
- EP-A- 0 663 733
- WO-A-93/25987
- FR-A- 2 724 038
- US-A- 4 761 830
- US-A- 5 280 650

## Description

Le problème à l'origine de la présente invention est relatif à la consommation électrique des récepteurs de télécommande des serrures des portières de voiture. Le problème est d'ailleurs transposable dans tous domaines faisant appel à une télécommande.

Le porteur de la clé ou boîtier de télécommande peut commander à tout moment l'émission de signaux infrarouges ou radio et le récepteur doit pouvoir les recevoir.

Afin de limiter la consommation du récepteur, pour préserver la batterie de la voiture en stationnement, celui-ci comporte, de façon classique, un microprocesseur avec, en frontal, un circuit radio.

Le microprocesseur est normalement en veille, donc à faible consommation, et c'est le circuit radio frontal qui le réveille lorsque, après démodulation des signaux radio, il reconnaît un motif temporel de bits d'en-tête de la télécommande. Le circuit radio peut aussi être prévu pour présenter au repos un état de veille, à faible consommation, dans lequel il peut détecter l'arrivée d'un motif de télécommande pour alors se réveiller en passant à l'état actif, pour la réception de la suite de la télécommande.

Cependant, le circuit radio, dont la sensibilité correspond à une portée pouvant atteindre la centaine de mètres, reçoit d'autres signaux perturbateurs, tels que des signaux de télémesure de pression des pneumatiques de la voiture, ou les signaux d'autres voitures, ou encore des télécommandes de portes de garage, de stores et autres. Le circuit radio se réveille alors et réveille le microprocesseur, qui analyse les données de télécommande qui suivent l'en-tête et qui les rejette, comme étant étrangères, avant de repasser en veille.

Chaque réception de signaux parasites provoque ainsi un accroissement de consommation.

La présente invention vise à limiter l'accroissement de consommation dû aux parasites reçus par le récepteur, sans toutefois en augmenter excessivement la complexité.

Le document FR-A-2 724 038 décrit un récepteur de télécommande avec un récepteur de signaux réliés à une unité logique pour le traitement des informations portées par lesdits signaux, l'unité logique n'étant activée que lorsqu'un signal présentant une configuration prédéterminée de la modulation en bande de base est reçu.

A cet effet, l'invention concerne un procédé de gestion d'un récepteur de signaux de télécommande provenant d'un émetteur associé, le récepteur comportant des moyens de réception des signaux reliés à un processeur d'exécution des télécommandes et agencés pour être, en l'attente de télécommande, en mode veille, à consommation réduite, procédé dans lequel on émet un motif d'entête d'authentification d'une télécommande destiné à faire passer les moyens de réception en mode actif pour la réception de la suite de la télécommande, procédé caractérisé par le fait qu'on transfère les signaux reçus par les moyens de réception sur le processeur pour y rechercher le motif et, en cas d'insuccès, maintenir le mode veille des moyens de réception.

Ainsi, le récepteur n'est réveillé qu'à bon escient sans toutefois nécessiter de moyen de traitement supplémentaire pour reconnaître le motif puisque ce traitement est déporté dans le processeur qui, par nature, est adapté à ce genre de tâche.

Avantageusement, en l'attente de télécommande, le processeur passe en un mode veille, à consommation réduite, et effectue dans ce mode la recherche du motif.

La totalité du récepteur reste ainsi en veille en l'absence de motif reconnu.

L'invention présente un intérêt particulier pour toutes les applications de transmission, filaire, radio ou infrarouge, de signaux émis à des instants non prévisibles par le récepteur. Elle trouve en

particulier application dans le domaine de la domotique et des applications grand public.

L'invention sera mieux comprise à l'aide de la description suivante d'un mode de réalisation préféré du procédé de l'invention, en référence au dessin annexé, sur lequel :
- la figure 1 représente schématiquement un récepteur de télécommandes pour la mise en oeuvre du procédé de l'invention; et
- la figure 2, formée des figures 2A et 2B, représente, en fonction du temps t, une trame d'émission d'une télécommande et une trame de commande d'activation d'un circuit radio du récepteur.

Le récepteur représenté est embarqué à bord d'une voiture pour commander le verrouillage et le déverrouillage des serrures des portières. Le récepteur comporte un circuit radio récepteur 1, accordé ici à 433,92 MHz, relié à un processeur, ici microprocesseur, 2 d'exécution de télécommandes émises par un boîtier-émetteur non représenté. La liaison de commande 5 de sortie du microprocesseur 2 sert à commander un actionneur, non représenté, commandant les serrures.

Une liaison 3 permet au circuit radio 1 de fournir au microprocesseur 2 des signaux de données, ici binaires, correspondant aux signaux radio reçus c'est-à-dire détectés par démodulation. En sens opposé, une liaison 4 permet au microprocesseur 2 de commander le mode de fonctionnement du circuit 1, par un sous-ensemble 11 de ce dernier.

Le circuit 1 peut ainsi se trouver en un mode dans lequel il est dans un état pleinement actif, réveillé, dans lequel il peut détecter la totalité des signaux d'une télécommande, et un mode de veille, à faible consommation, dans lequel il ne peut détecter qu'une portion de début de la télécommande, qui est en particulier destinée à le réveiller pour la réception de la suite.

Le microprocesseur 2 comporte un sous-ensemble 12 lui permettant de fonctionner soit en mode pleinement actif, dans lequel il peut exécuter les télécommandes, soit en mode veille, à activité et consommation réduites, dans lequel il peut reconnaître une télécommande mais ne peut en exécuter les instructions.

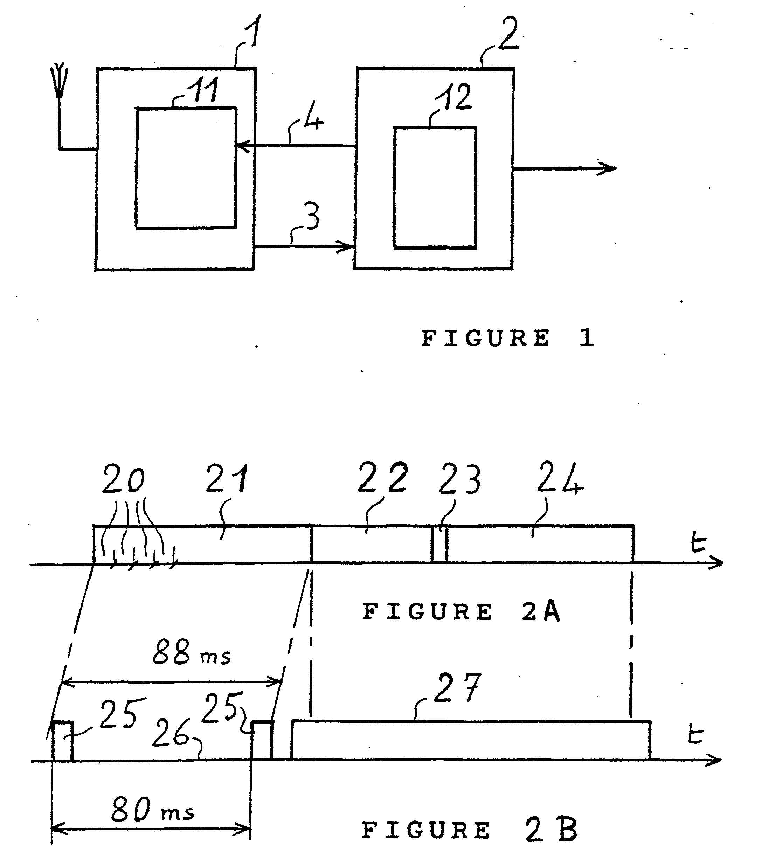

La figure 2A illustre le format d'un message de télécommande. Il est constitué essentiellement d'un préambule 21, 22 destiné à réveiller le circuit 1 et aussi le microprocesseur 2, et d'un champ de données 24 spécifiant la télécommande, donc, ici, les portières. Il est ici prévu un champ de temps mort 23, pour le passage à l'état actif du microprocesseur 2 avant la réception des données du champ 24.

Dans le préambule, la partie d'en-tête 21 comporte un motif 20 prédéterminé de bits, qui ici est répété onze fois. Cette répétition s'impose par le fait qu'ici le mode veille du circuit 1 ne consiste pas, comme cela aurait pu être prévu, en un mode statique à performances réduites à la détection du motif 20, mais qu'il s'agit d'une alternance cyclique entre un état "pleinement actif", de réception de tout le message, et un état "totalement inactif", incapable de détecter les signaux reçus.

En mode veille, la durée de l'état actif ci-dessus constitue une fenêtre 25 de lecture des signaux radio émis, qui dure 8 millisecondes pour une période de répétition de 80 ms. Le motif 20 émis dure 8 ms, si bien que le champ 21 de onze motifs 20 dure 88 ms. De ce fait, quel que soit le déphasage entre le champ 21 émis et la période de répétition de 80 ms pour sa lecture, une fenêtre 25 entière de lecture du circuit 1 se trouve temporellement comprise dans le champ 21 et ainsi les bits de l'un au moins des onze motifs 20 sont détectés.

Le champ 22, ici prévu, a pour but de permettre un filtrage supplémentaire, logique, des messages reçus.

Le fonctionnement du récepteur est expliqué plus en détails ci-dessous.

En attente de télécommande, le circuit radio 1 est en mode veille, pour l'échantillonnage de tout champ 21 émis. Les signaux détectés, c'est-à-dire démodulés et mis en forme binaire, sont transmis au microprocesseur 2, pour leur reconnaissance. Le circuit radio 1 n'est donc pas un processeur frontal puisqu'il est transparent d'un point de vue traitement logique, par le fait qu'il déporte, dans le microprocesseur 2, la reconnaissance de tous les signaux qu'il détecte, y compris le motif 20 commandant son mode de fonctionnement. Le récepteur peut ainsi être évolutif, par programmation de microprocesseur 2 selon les besoins. En particulier, le motif 20 peut être prédéterminé et mémorisé dans le microprocesseur 2 ou être codé selon une loi déterminée et être reconnu par le fait qu'il est conforme à cette loi.

En l'absence de reconnaissance du motif 20, le microprocesseur 2 laisse le circuit 1 dans le mode veille. Sinon, la reconnaissance du motif 20 lui fait activer la liaison 4 pour forcer (11) le fonctionnement du circuit 1 dans le mode actif.

Il peut être prévu que le sous-ensemble 11 commande naturellement le fonctionnement en l'un des deux modes, par exemple veille, si bien que la liaison 4 n'a alors à transmettre que des ordres de forçage vers l'autre mode, par exemple actif. Dans cet exemple cependant, c'est le microprocesseur 2 qui commande explicitement le passage d'un mode à l'autre, et son maintien.

Comme, ici, le mode veille est constitué d'une alternance d'états actif 25 et inactif 26 (fig. 2B), le passage au mode purement actif du circuit 1 consiste donc à prolonger (27), pour la durée d'une télécommande, la fenêtre 25 de lecture du champ 21, prévue pour 8 ms, ou, si la reconnaissance du motif 20 n'intervient qu'après la fin de la fenêtre 25 de 8 ms, le microprocesseur 2 commande par forçage une fenêtre supplémentaire 27 de durée voulue, c'est-à-dire inhibe tout passage à l'état inactif du circuit 1.

Le champ 22 d'identification de la télécommande est de même reçu et traité par le microprocesseur 2. Le champ 22 sert à ne réveiller pleinement (12) le microprocesseur 2 que si la télécommande, identifiée comme telle par le champ 21, le concerne. Le champ 22 comporte des données prédéterminées mémorisées par le microprocesseur 2, comme par exemple le modèle de voiture, l'année de fabrication, la vitesse de modulation et le mode de codage du champ 24 et autres. Ce n'est qu'en cas de reconnaissance des données du champ 22 que le microprocesseur 2 commande (12) son passage à l'état pleinement actif pour recevoir le champ des données de télécommande 24.

Le récepteur de cet exemple est à base de technologie CMOS, technologie dans laquelle la consommation électrique croît sensiblement linéairement avec la fréquence de l'horloge de commande (sous-ensemble 12), non représentée en détails.

De ce fait, le passage en mode veille consiste ici à diminuer la fréquence de cette horloge. La commutation entre la fréquence nominale, d'état actif, et la fréquence réduite, d'état de veille, s'effectue par commande d'un multiplexeur à deux voies recevant un signal d'horloge d'un oscillateur et ce même signal après division ou multiplication dans un diviseur logique ou une boucle à verrouillage de phase (PLL) élévatrice de fréquence.

Dans un autre exemple, la réduction de consommation pourrait être obtenue par réduction de la tension d'alimentation ou encore par mise hors-tension de sous-ensembles annexes, c'est-à-dire non nécessaires pour la reconnaissance du champ 21 et aussi, ici, du champ 22.

Après reconnaissance du champ 22, le microprocesseur 2 commande son propre passage (12) au mode actif et exploite ensuite le champ 24 pour activer la liaison 5.

La vitesse de modulation des bits émis est relativement limitée, 2 ms par bit, ce qui limite la charge de traitement du microprocesseur 2 et lui permet en particulier de traiter les champs 21 et 22 alors qu'il fonctionne au ralenti. Chaque motif de 8 ms du champ 21 ne comporte donc que 4 bits, le champ 22 comportant en tête un bit de START spécifique de 5 ms, dont 3 ms de début à l'état haut, suivi d'un octet sur 16 ms. Le champ 23 dure 5 ms et est suivi du champ 24 de données de télécommande, de 58 ms.

D'une façon générale, le procédé de l'invention permet de réveiller un ou des sous-ensembles du récepteur de télécommandes présentant un mode veille, ceci de façon simultanée ou progressive. Le préambule (21 et/ou 22) est traité par le processeur 2 de préférence en mode veille pour réveiller pleinement celui-ci après avoir réveillé, ou en réveillant en même temps, le récepteur radio si celui-ci est prévu avec un mode veille.

## Revendications

1. Procédé de gestion d'un récepteur de signaux de télécommande provenant d'un émetteur associé, le récepteur comportant des moyens (1) de réception des signaux reliés à un processeur (2) d'exécution des télécommandes et agencés pour être, en l'attente de télécommande, en mode veille, à consommation réduite, procédé dans lequel on émet un motif (20) d'en-tête d'authentification d'une télécommande destiné à faire passer les moyens de réception (1) en mode actif pour la réception de la suite de la télécommande (24), procédé **caractérisé par le fait qu'**on transfère les signaux reçus par les moyens de réception (1) sur le processeur (2) pour y rechercher le motif (20) et, en cas d'insuccès, maintenir le mode veille des moyens de réception (1).

2. Procédé de gestion selon la revendication 1, dans lequel, en cas de reconnaissance du motif (20), le processeur (2) force les moyens de réception (1) dans le mode actif.

3. Procédé de gestion selon l'une des revendications 1 et 2, dans lequel, en l'attente de télécommande, le processeur (2) passe en un mode veille, à consommation réduite, et effectue dans ce mode la recherche du motif (20).

4. Procédé de gestion selon la revendication 3, dans lequel, le motif (20) étant associé à un bloc (22) de données déterminées d'identification de la télécommande, le processeur (2) recherche ledit bloc d'identification (22) dans les signaux reçus pour, en cas de succès, passer en un mode actif d'exécution de la télécommande.

5. Procédé de gestion selon l'une des revendications 1 à 4, dans lequel le mode veille des moyens de réception (1) est établi par commande de basculements cycliques entre un état actif, de réception, et un état inactif.

6. Procédé de gestion selon l'une des revendications 1 à 4, dans lequel le mode veille des moyens de réception (1) est établi par commande de basculements cycliques entre un état actif, de réception de télécommandes, et un état de veille, de réception du motif (20).

7. Procédé de gestion selon l'une des revendications 1 à 6, dans lequel on fait passer en mode veille par réduction de la fréquence de fonctionnement.

## Patentansprüche

1. Verfahren zur Steuerung eines Empfängers für von einem zugehörigen Sender stammende Fernsteuersignale, wobei der Empfänger Mittel (1) zum Empfang von Signalen umfasst, die mit einem Prozessor (2) zur Ausführung von Fernsteuersignalen verbunden und dafür ausgelegt sind, um sich beim Warten auf ein Fernsteuersignal in einem Bereitschaftsmodus mit reduziertem Verbrauch zu befinden, wobei ein vorausgehendes Motiv (20) zur Authentifizierung eines Fernsteuersignals gesendet wird, das dazu bestimmt ist, die Empfangsmittel (1) in einen aktiven Modus für den Empfang des nachfolgenden Fernsteuersignals (24) zu bringen, **dadurch gekennzeichnet, dass** die durch die Empfangsmittel (1) empfangenen Signale auf den Prozessor (2) übertragen werden, um das Motiv (20) dort zu suchen, und im Misserfolgsfall der Bereitschaftsmodus der Empfangsmittel (1) beibehalten wird.

2. Steuerungsverfahren nach Anspruch 1, bei dem im Falle des Erkennens des Motivs (20) der Prozessor (2) die Empfangsmittel (1) in den aktiven Modus bringt.

3. Steuerungsverfahren nach einem der Ansprüche 1 und 2, bei dem beim Warten auf ein Fernsteuersignal der Prozessor (2) in einen Bereitschaftsmodus mit reduziertem Verbrauch übergeht und in diesem Modus die Suche des Motivs (20) ausführt.

4. Steuerungsverfahren nach Anspruch 3, bei dem das Motiv (20) mit einem Block (22) vorbestimmter Daten zur Identifizierung des Fernsteuersignals verknüpft ist und der Prozessor (2) den Identifizierungsblock (22) in den empfangenen Signalen sucht, um im Erfolgsfall in einen aktiven Modus der Ausführung des Fernsteuersignals überzugehen.

5. Steuerungsverfahren nach einem der Ansprüche 1 bis 4, bei dem der Bereitschaftsmodus der Empfangsmittel (1) durch Steuerung zyklischen Umschaltens zwischen einem aktiven Empfangsmodus und einem inaktiven Modus hergestellt wird.

6. Steuerungsverfahren nach einem der Ansprüche 1 bis 4, bei dem der Bereitschaftsmodus der Empfangsmittel (1) durch Steuerung zyklischen Umschaltens zwischen einem aktiven Modus für den Empfang von Fernsteuersignalen und einem Bereitschaftsmodus für den Empfang des Motivs (20) hergestellt wird.

7. Steuerungsverfahren nach einem der Ansprüche 1 bis 6, bei dem durch Reduzierung der Arbeitsfrequenz in den Bereitschaftsmodus übergegangen wird.

## Claims

1. Method of management of a receiver of remote control signals originating from an associated transmitter, the receiver comprising means (1) of reception of the signals which are connected to a processor (2) for executing the remote controls and are designed to be, on remote control standby, in idle mode, at reduced consumption, in which method a remote control authentication header pattern (20) is transmitted, intended to switch the reception means (1) into active mode for the reception of the continuation of the remote control (24), method **characterized in that** the signals received by the reception means (1) are transferred to the processor (2) so as to search therein for the pattern (20) and, if unsuccessful, maintain the idle mode of the reception means (1).

2. Method of management according to Claim 1, in which, in the event of recognition of the pattern (20), the processor (2) forces the reception means (1) into the active mode.

3. Method of management according to one of Claims 1 and 2, in which, on remote control standby, the processor (2) switches to idle mode, at reduced consumption, and in this mode performs the search for the pattern (20).

4. Method of management according to Claim 3, in which, the pattern (20) being associated with a block (22) of specified data for identifying the remote control, the processor (2) searches for the said identifying block (22) in the signals received so as, if successful, to switch into an active mode of execution of the remote control.

5. Method of management according to one of Claims 1 to 4, in which the idle mode of the reception means (1) is established by control of cyclic switchings between an active state, of reception, and an inactive state.

6. Method of management according to one of Claims 1 to 4, in which the idle mode of the reception means (1) is established by control of cyclic switchings between an active state, of reception of remote controls, and an idle state, of reception of the pattern (20).

7. Method of management according to one of Claims 1 to 6, in which the switch to idle mode is effected by reduction of the operating frequency.
